# EUROPEAN PATENT APPLICATION

(11) **EP 4 134 260 A1**
(43) Date of publication of application: **15.02.2023**
(21) Application number: 21191086.4
(22) Date of filing: 12.08.2021
(51) Int. Cl.: B60L 3/00, B60L 3/06, B60L 7/02

(54) **OVERVOLTAGE PROTECTION SYSTEM FOR AN ELECTRIC AIR VEHICLE**

(71) Applicant: Lilium eAircraft GmbH, 82234 Wessling (DE)
(72) Inventor: MAUNOURY, Patrice, 80339 München (DE)
(74) Representative: Grünecker Patent- und Rechtsanwälte PartG mbB

(57) **Abstract**

The present invention relates to an overvoltage protection system for an electric aircraft to protect the aircraft electrical network from overvoltages that may occur during excess power regeneration by electrical propulsion engines. If excess regeneration power occurs in the network, which is detected by permanent voltage monitoring, the excess power is diverted in a controlled and regulated manner to dissipation devices for being transformed into heat. In order to maintain flight safety and dissipation efficiently, the dissipation devices are cooled down, preferably by means of an air flow to which the aircraft is subjected to during flight or by the propulsion air flow.

## Description

### FIELD OF THE INVENTION

The present invention relates to an overvoltage protection system for an aircraft with electrical propulsion. More specifically, the present invention relates to an overvoltage protection system for protecting an aircraft electrical network from transient overvoltages that may occur when an electrical propulsion engine regenerates power.

### BACKGROUND ART

In recent years, electricity has gained increasing importance as a form of energy for driving air vehicles. This includes, in particular, electric aircrafts with vertical take-off and landing functionality (eVTOL).

A crucial component for aircrafts with electrical propulsion (i.e. electrically driven/electrically propelled aircrafts sometimes called "electric aircrafts" for short), including eVTOL, is an appropriate energy storage system (ESS). The energy storage system may be realized in the form of a battery system of chargeable batteries having a modular structure including plural energy storage modules each of which may have plural energy storage sub-modules, which may be further structured into a plurality of individual battery cells. Examples of a battery type suitable for use in the framework of the present invention are Lithium (Li) ion batteries, without the present invention being limited to this.

Electric propulsion engines may regenerate power when operating in a reverted mode, i.e. as a generator, during a phase when the rotation speed of an electric propulsion engine undergoes braking (i.e. the fan rotation speed is reduced). This is necessary in certain situations during flight in order to keep proper control over the aircraft.

During normal operation, power regenerated by one or more electrical propulsion engines is consumed by one or more other propulsion engines or by the ESS (in particular: parts or modules thereof such as battery cells). Nevertheless, there may be a limitation in the maximum power consumption of the ESS, from the battery cells technology for instance or when some of the ESS modules fail; there may also be degraded mode or failure of the network management system that will lead to less ESS modules connected to the same amount of electrical propulsion engines or more electrical engines connected to the same amount of ESS modules.

As a consequence, an excess power flow that cannot be consumed otherwise by components of the aircraft may occur. This excess power flow may, in particular, lead to overvoltages in the aircraft electrical network. In view of the damage that triggers overvoltage to all the electrical and electronic equipment connected to the HV network, which may thus affect flight security, the aircraft electrical network must be protected therefrom. A protection from transient overvoltages due to regenerated excess power is therefore required for aircrafts with electrical propulsion in order to operate safely.

Conventionally, methods for overvoltage protection in an electrical network of an aircraft are known, wherein the overvoltage protection is achieved by a device that connects electrical network to the electrical ground in case of an overvoltage, in order to direct the electrical energy to the ground and eventually enable the voltage to decrease. This energy flow does not significantly heat up the electrical ground because its thermal inertia and its exchange servers are usually high enough to prevent any overweight (typically for a metallic aircraft).

However, such conventional methods for overvoltage protection have certain drawbacks that make them less suitable for aircrafts with electrical propulsion.

First of all, in electric aircrafts there is a higher level of electrical power and energy that may trigger an overvoltage. Indeed, the normal regenerated power from electrical propulsion is a new threat for aircrafts with electrical propulsion compared to conventional ones.

Moreover, for reasons of weight economy, electric aircrafts are often constructed with an aircraft body with a composite frame. This reduces the thermal inertia and exchange surface of the electrical ground as compared to conventional pure metallic aircraft bodies. Hence, the excess power threat further increases for aircrafts with electrical propulsion.

Another overvoltage protection method that is known in the art of electrical propulsion such as in production-distribution industry as well as in railways can be briefly described as follows. The overvoltage protection may be achieved by a device that connects the electrical network to a dedicated load, i.e. a resistance, and regulate the power distributed to this resistance to keep the voltage below a requested limit and to prevent voltage collapse as a side effect. The resistance consumes the electrical energy by converting it into heat. This power consumption prevents power unbalance, which is a root cause of overvoltage.

In air vehicles, due to the higher sensitivity to aerodynamic performance compared to a train together with the higher speed, however, the external implementation of a device such as that known for overvoltage protection in railways would be disadvantageous because it costs too much in additional drag in view of the dimensions of the device and the air speed. On the other hand, an internal implementation of the overvoltage protection demands to manage internally the heat dissipation in an already constrained environment, or at least has a drawback that it would require an additional cooling device of the overvoltage protection itself.

### SUMMARY OF THE INVENTION

The present invention has been made to address the above identified problems and aims to provide an overvoltage protection system suitable for an aircraft with electrical propulsion with power regeneration, and a respective method.

This is achieved by the features of the independent claims.

According to a first aspect of the present invention, a system for overvoltage protection in an electrical network of an aircraft with electrical propulsion, against overvoltage resulting from excess power being generated by one or more propulsion engines regenerating power, is provided. The system comprises a voltage monitoring device for measuring the voltage in the electrical network and detecting whether or not the voltage exceeds a predetermined upper threshold value. The system further comprises a power control device coupled to the voltage monitoring device to receive a voltage measurement result as an input for diverting and regulating the excess power to flow to one or more dissipation devices including resistive loads located in or on the aircraft in a controlled manner when it is detected that the voltage exceeds the upper threshold value. The system further comprises the one or more dissipation devices for transforming electrical power into heat and dissipating the electrical power as thermal power in the resistive loads. The system further comprises an arrangement for cooling down the dissipation devices during operation of the aircraft.

According to a second aspect of the present invention, a method of overvoltage protection in an electrical network of an aircraft with electrical propulsion, against overvoltage resulting from excess power being generated by one or more propulsion engines' regenerating power, is provided. The method comprises the steps of monitoring the voltage in the electrical network, detecting whether or not the voltage exceeds a predetermined upper threshold value, diverging and regulating the excess power to flow to one or more resistive loads located in or on the aircraft in a controlled manner when it is detected that the voltage exceeds the upper threshold value, dissipating the electrical power as thermal power in the resistive loads, and cooling down the resistive loads.

It is the particular approach of the present invention to provide an overvoltage protection system from transient overvoltages occurring due to excess power regeneration from electrical propulsion engines by diverting the excess power to dissipative loads in a regulated manner. By providing a respective cooling arrangement, the system is made suitable for electric networks of aircrafts with electrical propulsion. In preferred embodiments, the cooling arrangement is implemented by placing the dissipative loads in the air ducts of electrical propulsion engines.

According to embodiments, the voltage monitoring device further detects whether or not the voltage in the electrical network has dropped below the second threshold value. The second threshold value is smaller than or equal to the upper threshold value. The power control device stops (or at least reduces) the power flow to the dissipation devices when it is detected that the voltage drops below the second threshold. Implementing two different threshold values, wherein the second threshold value for stopping power diversion is smaller than, i.e. lower than, the first threshold value is needed to prevent the voltage to drop drastically when the electrical network is simply connected to a resistive load by-passing the other loads..

In accordance with embodiments, the system further comprises one or more temperature management devices coupled to the power control device for monitoring the temperature of each of the dissipation devices. In embodiments, the power control device is further adapted to stop power flow in the dissipation device when the temperature of the dissipation device exceeds a predetermined temperature threshold value. In embodiments, the power control device is further adapted to stop its power flow when its corresponding and closest dissipation device exceeds temperature threshold and the electrical network is used to redistribute any excess power to a different and remote dissipation device

According to embodiments, there are a plurality of dissipation devices and each of the dissipation devices is associated with and located in proximity to a respective one of a plurality of electrical propulsion engines. In particular, the association means that electric power regenerated by a propulsion engine associated with the particular dissipation device is preferably diverted to the associated dissipation device, unless this is impossible, in particular, due to overheating.

According to embodiments, the power control device comprises a plurality of power control modules. Each of the power control modules is associated with a propulsion engine and a corresponding dissipation device. Alternatively, the power control device may be made up of a single unit for regulation of the excess power to plural individual dissipation devices and with an additional specific function of managing power flow diversion from itself to the remote dissipation devices

In embodiments, the arrangement for cooling down the dissipation devices is realized by implementing the resistive loads in an aircraft area submitted to air flow so as to be cooled down by the air flow. More specifically, this may be realized by placing the resistive loads of the dissipation devices in the air ducts of the associated electrical propulsion engines. Alternatively, the dissipation devices (resistive loads) could be implemented on the wing of the aircraft. Both implementations get the benefit of the engine airflow or the aircraft airflow as cooling medium.

In accordance with a further particular aspect of the present invention, an aircraft comprising a system according to the first aspect or its embodiments is provided.

In embodiments, the aircraft is an electric vertical take-off and landing aircraft, eVTOL.

Further features and advantages of the present invention are set forth in dependent claims.

Embodiments and features of the present invention herein described or set forth in the appended claims may be combined unless it is obvious from the context that such a combination is not possible for particular embodiments or features.

### BRIEF DESCRIPTION OF THE DRAWINGS

Additional features and advantages of the present invention will become apparent in the following and more particular description as illustrated in the accompanying drawings, wherein:
- Fig. 1A: provides a general overview of the system architecture of an overvoltage protection system according to embodiments of the present invention, implemented in an electric aircraft electrical network;
- Fig. 1B: provides a general overview of the system architecture of an overvoltage protection system according to further embodiments of the present invention, implemented in an electric aircraft electrical network;
- Fig. 2: is a flowchart illustrating an exemplary method according to embodiments of the present invention;
- Fig. 3: includes diagrams illustrating the power control operation principle according to embodiments of the present invention;
- Fig. 4: including Figs. 4A to 4D illustrates the power flow during various operation phases in an electrical network of an aircraft with electrical propulsion comprising an overvoltage protection system according to embodiments of the present invention; and
- Fig. 5: including Figs. 5A and 5B includes diagrams illustrating the switching of electrical connections in embodiments of the present invention, corresponding to the system architecture as illustrated in Figs. 1A and 1B, respectively.

### DETAILED DESCRIPTION

The following description of particular embodiments serves for a more detailed explanation of the principles underlying the present invention. However, any details provided in the detailed description serve for illustration by means of example only and are not intended to limit the invention that is defined by the appended claims.

The present invention relates to a system for protecting an aircraft with electrical propulsion from overvoltage.

The system detects overvoltage that may transiently occur in the electrical network when the propulsion engines regenerate power and direct the excess power flow to a dedicated resistive load. The excess power is thus consumed and thermally dissipated, preventing overvoltage. The resistive load is cooled. In particular embodiments, this is done by the propulsion engine airflow.

Although it is preferable for reasons of energy economy and thus flight range to use the regenerated power either for loads, in particular propulsion engines still consuming power, or by storing the regenerated power in the ESS, there are certain limitations where this is not always possible in practice. In particular, there may be a situation where the ESS (batteries) are not capable of being further loaded either. This may be the case, for instance, if the batteries of the ESS are full (fully loaded) or, more likely, due to certain limitations of the power to be received by a battery as charging.

The system may be distributed, in a modular structure, to increase its power dissipation capacity and to enable the transfer of excess power from one engine to a protection system module implemented in another engine, when the airflow of the former engine would not be enough to cool down the respective resistive device.

A distributed, modular structure may further be applied to a system, wherein some of the plural propulsion engines are not equipped with their own (associated) overvoltage protection module, in particular, dissipation device but nevertheless each propulsion engine may regenerate power that needs to be diverted in the event of excess power.

In general words, the operation principles of the described embodiments of the present invention may be summarized as follows.

Firstly, the voltage in the electrical network is permanently monitored. This can be done at various portions of the electrical network, since the voltage is the same throughout the network.

In the event of an electrical voltage reaching an upper threshold, the system triggers a power flow to resistive loads (dissipation devices) with the effect of consuming the excess power (i.e. the power that cannot be consumed in the aircraft electrical network itself or sent to the ESS for battery charging), which is the root cause of an abnormal voltage rise. The system regulates the power consumed by the resistive loads to keep the voltage below the limit and to prevent sudden voltage drop simultaneously. Sudden voltage drop, that would cause a hard connection between the resistive load and the rest of the network, should be avoided because it would disturb and even in worst case prevent the operation of the loads connected to the electrical network including the propulsion engines.

For cooling down the resistive loads, which is an essential aspect on electric aircrafts, as explained above, the resistive loads are implemented in an aircraft area submitted to air flow and are thus cooled down by this air flow. In particular, for aircraft is and technology in their propulsion system, they may be implemented inside the propulsion fan's duct. For aircrafts without such technology they may be implemented in a location of the aircraft's external area inside the open section of the propulsion air flow, such as on the wings.

In preferred embodiments, the resistive loads are distributed, rather than centralized in a single resistive load, not only for redundancy benefit but also to enable the system to dissipate more excess power in the resistive loads that are better cooled down. The system is thus able to stop supply power to any overheated resistive load and direct the excess power flow to the others. Indeed, depending on the flight phase or on the thrust distribution, the air flow of the propulsion engines may be different from one another, and for some of them not high enough to cool down the highest excess power events.

In preferred embodiments, the system monitors the temperature (more preferably, the temperature rate as well) of its resistive loads and is thus able, with its power control and the electrical network, to distribute the excess power based on the thermal monitoring. The excess power will be distributed naturally on the electrical network to which resistive loads are activated by their corresponding power control.

The present invention thus provides a protection from overvoltage in the electrical network with regenerated power from the electrical propulsion and the implementation of such a protection in an aircraft with electrical propulsion. It further provides a means to dissipate the heat produced by the overvoltage protection in an aircraft. The latter may be achieved with an external air flow cooling, or the propulsion system air flow from the aircraft air flow. Moreover, the present invention ensures the whole power supply of the electrical network does not collapse while protecting from the overvoltage, by means of a respective power control. The latter implies, in particular, that voltage and temperature are permanently monitored.

The present invention thus enables the implementation of overvoltage protection for an aircraft with electrical propulsion, which is required from the safety perspective, under the particular challenges of an increasing electrical power, compared to conventional aircrafts, while at the same time minimizing weight, volume, and drag costs of the implementation.

These savings are economically valuable, as being equivalent to payload savings.

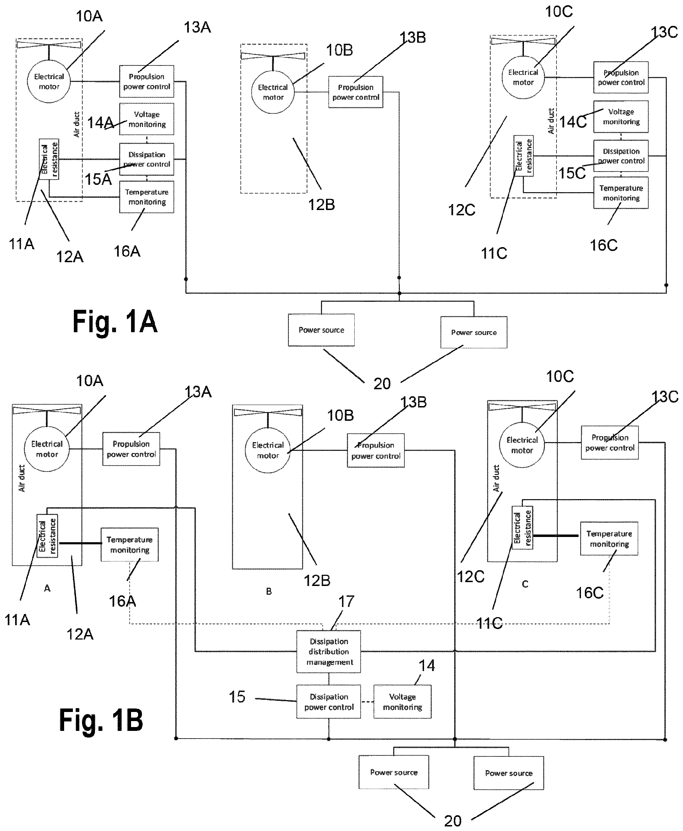

A schematic overview of an aircraft electrical network including an overvoltage protection system according to embodiments of the present invention is illustrated in Fig. 1A.

The drawing shows an aircraft electrical network including three electrical motors (electrical propulsion engines) 10A, 10B, and 10C. Each of the electrical motors is associated with and coupled to a respective propulsion power control equipment 13A, 13B, and 13C for controlling power supply from a power source 20 (in particular: an ESS) to the respective electric motor.

In the illustrated example, two of the three electric motors (10A and 10C) are associated with modules of an overvoltage protection system according to embodiments of the present invention. As can be seen therefrom, in the modular layout of the system according to the present invention, not every electrical propulsion engine needs to be equipped with its own associated overvoltage protection equipment. Needless to say the illustrated structure is merely an example. Both the overall number of electrical propulsion engines as well as the portion of those which is equipped with its own associated overvoltage protection system modules may vary. In the framework of the present invention, the situation is, for instance, also possible wherein every electrical motor is associated with its own overvoltage protection system module, in the same manner as this is the case in the illustrated example for electrical motors 10A and 10C.

Each overvoltage protection system module comprises a dissipation device (electrical resistance) 11A and 11C, which is, in the present illustrated example, situated in the air duct (12A and 12C) of the respective electric motor, which is illustrated as a motor with duct fan technology. There is no electrical resistance situated in the air duct 12B of electric motor 10B, because this motor is not equipped with a module of the overvoltage protection system.

The modular structure, with distributed dissipation devices has the advantage indicated above of providing for more efficient cooling down under the conditions of an aircraft. Specifically, for weight reduction it is preferable to use relatively thin resistive elements (with a thickness of, by way of a non-limiting example only, in the order of 1cm to 3cm (centimeters, as compared to resistive elements used in the rail industry, which may have a thickness of about 50cm). Together with the weight reduction, at the same time, using thin resistor elements also improves the relation between volume and surface, which improves cooling. In particular, a plurality of resistive elements may be arranged so as to allow an airflow in between them for enhancing the active cooling surface as compared to having a single large resistive element.

Each overvoltage protection system module further comprises a dissipation power control module (15A and 15C) which is an essential component of the respective overvoltage protection system module. It is coupled to a respective voltage monitoring module (14A and 14C) and a respective temperature monitoring device (16A and 16C) for receiving monitoring results from the latter devices. Specifically, the dissipation power control modules 15A and 15C form a power control device according to the present invention. The respective propulsion power control modules 13A and 13C may be both physically separated from modules 15A and 15C as well as form integrated components with modules 15A and 15C. The temperature monitoring device (16A and 16C) is coupled to the respective electrical resistance (14A and 14C) for performing the respective temperature measurements. The voltage monitoring module and the temperature monitoring module are further coupled to the power control device for communicating the results to the power control device. As indicated above, voltage monitoring is, in principle, possible at every position of the aircraft electrical network, because the voltage can be assumed to be equal throughout the network. However, distributing the voltage monitoring and monitoring the voltage separately at positions close to the respective overvoltage protection components (modules) may have the advantage of a less complicated communication network and wiring structure.

An alternative example of an aircraft electrical network including an overvoltage protection system according to embodiments of the present invention is illustrated in Fig. 1B.

The same or similar components are designated by the same reference numerals so that the description thereof is not repeated. Just as in Fig. 1A, there are three electrical motors 10A, 10B, and 10C, of which only two (10A and 10C) are associated with their own overvoltage protection equipment.

The difference in the arrangement in Fig. 1B as compared to that of Fig. 1A is that the dissipation power control is performed centralized in a respective dissipation power control component 15. Dissipation power control component 15 serves for controlling and managing to regulate the dissipation power flow, the goal of this function is to keep the voltage below the upper limit and above the lower limit, and it triggers only when the voltage reaches the upper limit. In order to manage the distribution of the excess power to be dissipated, an additional dissipation distribution management component 17 is foreseen. Dissipation distribution management component 17 serves to direct the regulated or controlled power flow to the dissipation device, the goal is to send it to all healthy devices, excluding the ones exceeding their thermal limits. Components 15 and 17 together may form a power control device according to the present invention, in this case a centralized device serves for distributing the excess power flow to plural dissipation devices (11A and 11C) associated with and located in the air ducts (12A and 12C) of plural electric propulsion engines (10A and 10C). The dissipation power control component 15 is connected to a centralized voltage monitoring device 14. Of course, temperature monitoring remains to be performed in a distributed manner, as temperatures of the electrical resistances (11A and 11C) may vary considerably and the main aim of temperature monitoring resides in re-distributing excess power flow according to the individual measurement results of temperatures of the individual dissipation devices.

For the sake of completeness, it is noted that under certain circumstances a centralized power control device connected to a plurality of dissipation devices as illustrated in the embodiment of Fig. 1B may lead to an electromagnetic threat, as the controlled power signal between the power control device and the dissipation device is specifically emissive, embedding high-frequency power ripple in essence. Hence, respective countermeasures may have to be taken. Alternatively, this can be avoided by having a decentralized structure as illustrated in Fig. 1A.

In both the centralized or decentralized structure, the invention enables to manage the overvoltage protection availability regarding the temperature monitoring, which is beneficial from a safety perspective, as the failure of the overvoltage protection is equivalent to the absence of overvoltage protection.

The temperature monitoring can be communicated to the aircraft flight control and to the aircraft flight management units, that are commonly implemented in aircraft. With these inputs, together with the health status of the energy storage system, indicating indirectly how much regenerated power they can consume when needed, the flight management and flight control units will be able to manage flight operational and flight performance limitations, potentially switching to a degraded flight mode without any flight law demanding power regeneration from the electrical propulsion engines. To do so, the flight management and flight control units will compare the temperature of the dissipation devices to a preventive temperature threshold, lower than the maximum operation one, and will consider how many dissipation devices are below the threshold and so fully available for overvoltage protection or beyond, and then susceptible to reach their limit when an excess power situation occur.

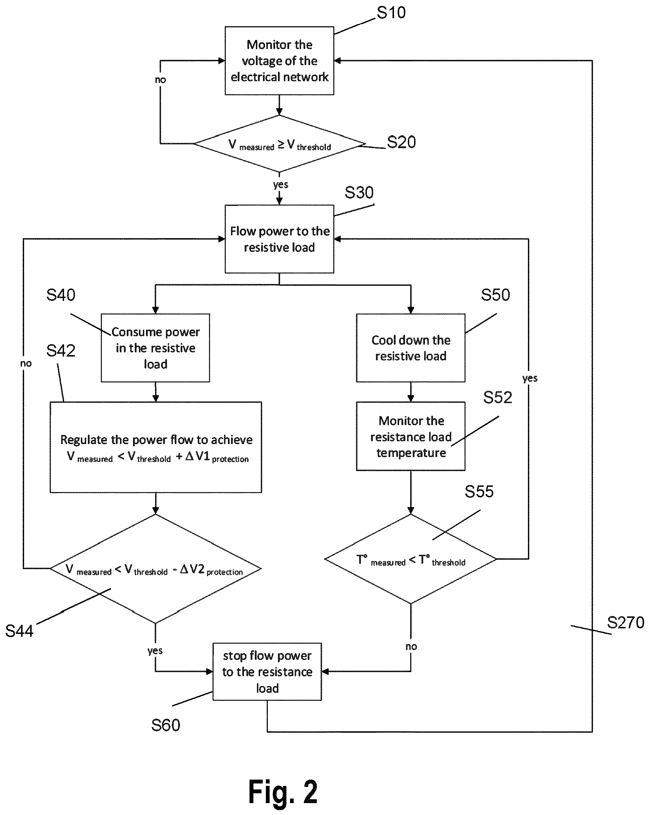

In the following, an exemplary method according to embodiments of the present invention will be described with reference to Fig. 2.

Processing starts at step S10, wherein the voltage of the electrical network of the aircraft is monitored through measurement by the voltage monitoring device. As soon as it is determined in subsequent step S20 that the measured voltage reaches or exceeds a predetermined voltage threshold value (upper threshold value) (S20: yes), processing proceeds to step S30, wherein excess power is diverted to flow to a resistive load of a dissipation device. Otherwise (S20: no) processing flow returns to step S10 and voltage monitoring continues.

In following step S30, two sequences of processing are performed in parallel, as shown in the left-hand portion and the right-hand portion of the diagram, respectively.

Firstly (illustrated on the left-hand side), at step S40, the excess power is consumed in the resistive electric load of the dissipation device. More specifically, as indicated at step S42, regulation is performed so as to achieve a situation, wherein the measured voltage drops down below the predetermined threshold. As indicated by the added value ΔV1_{protection} in the formula of S42, some tolerance may be acceptable here, meaning that it is acceptable that the measured voltage remains slightly above the predetermined threshold. Having such a tolerance may be beneficial from the point of view of implementation, because there will be a small delay between the detection that the measured voltage exceeds the upper threshold, the beginning of the power control and the connection to the resistance. Only as an example, to give an impression about possible implementations, the tolerance may be one or two magnitudes smaller than the predetermined upper threshold. For instance, if the predetermined upper threshold is at 950V (Volt), the value of ΔV1_{protection} may be equal to 10V. However, a situation with zero tolerance (ΔV1_{protection} = 0) is possible as well. As soon as it is determined at step S44 that the measured voltage falls below a second predetermined threshold value that is smaller than the predetermined upper threshold (S44: yes) processing of this branch ends and power flow to the resistance load is stopped at step S60. In the opposite case (S44: no), processing returns to step S30 and power consumption in the dissipation device continues. As indicated, the second predetermined threshold is smaller than the upper threshold of step S20 by a (positive) value ΔV2_{protection}. Having thus the threshold for stopping power flow to the dissipation device slightly below the threshold for diverting the power flow to the dissipation device is needed to avoid to trigger a drastic voltage drop on the HV (high voltage) network when connecting the resistance to it, thus diverting the excess power to the dissipation device, and has the benefit of preventing the system from snapping from one state to the other too frequently. For the above example with the upper threshold of 950V, a typical value of ΔV2_{protection} may again be in the order of 10V. However, in the framework of the present invention it would again be possible to have ΔV2_{protection} = 0. In particular, in the event of both ΔV1_{protection} = 0 = ΔV2_{protection} there would be only a single threshold V_{threshold} in all conditions of the diagram. Although not shown explicitly in the flowchart, a person skilled in the art is aware of the fact that the monitoring of the voltage of the electrical network continues during performance of the steps S40 to S44 illustrated as a left hand branch of Fig. 2.

Secondly (illustrated on the right-hand side), when the resistive loads (dissipation devices) consume electric power and transform it into heat, the temperature thereof rises and it must therefore be cooled down continually, as indicated in step S50. Examples of the respective arrangement are described above with reference to Fig. 1. As further indicated at step S52, the temperature of the resistive load (dissipation device) is permanently monitored by the temperature measurement device. As soon as it is detected at subsequent step S55 that the measured temperature exceeds a predetermined temperature threshold value (S55: no), power flow to that dissipation device is stopped at step S60. Such action is needed to prevent the occurrence of an uncontrolled overheat situation for the aircraft. As indicated above (not illustrated in this drawing) the excess power flow may be diverted to another dissipation device that has not yet reached the temperature threshold in that case. In the opposite case (S55: yes), processing returns to step S30 and power consumption in the dissipation device continues.

Hence, in the given embodiment there are two conditions for stopping excess power flow to a particular dissipation device, namely when the measured voltage has been sufficiently dropped so that overvoltage protection has been effective and does not need to be continued, or in case the available cooling mechanism of the dissipation device cannot further prevent an undesirable temperature increase, in which case preferably the excess power is consumed by another dissipation device. If a dissipation device is too hot, it will not receive power any more. With the distributed structure, if a dissipation device is too hot, the corresponding dissipation power control stops as well. With the centralized structure, the distribution management device is configured in a way that the controlled excess power is not diverted to the too hot dissipation device.

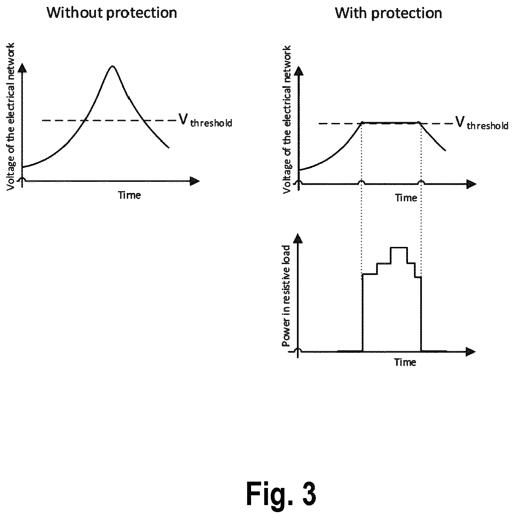

Fig. 3 illustrates the operation of power control according to embodiments of the present invention by means of diagrams showing voltage of the electrical network and dissipated power over time.

Specifically, the diagram on the left-hand side of Fig. 3 shows the situation without the overvoltage protection processing according the present invention. Hence, a large overvoltage peak may occur and could not be prevented.

The effect of overvoltage protection according to the present invention is shown in the upper diagram on the right-hand side of Fig. 3. In that case, any overvoltage exceeding the upper voltage threshold value can be prevented. It is noted that for simplicity in the present drawing, no voltage tolerance is indicated. On the other hand, the lower diagram on the right-hand side illustrates the power consumed by (i.e. transformed into heat in) the resistive load of the power dissipation device. As can be seen therefrom, power dissipation starts at a time when the threshold is reached from below and stops at the time when the measured voltage drops back down below the threshold. Between the start and the stop of the power dissipation, it is indicated that the action of the power control regulation leads to power input variation to the resistive load, as a result of the quick regulation loop keeping the voltage in the required range; the power supplied to the resistive load may also drop suddenly to null, merely because the power regeneration source having its own and independent regulation law stopped. For the sake of simplicity, it is assumed in this drawing that the temperature threshold is not exceeded during the illustrated time period.

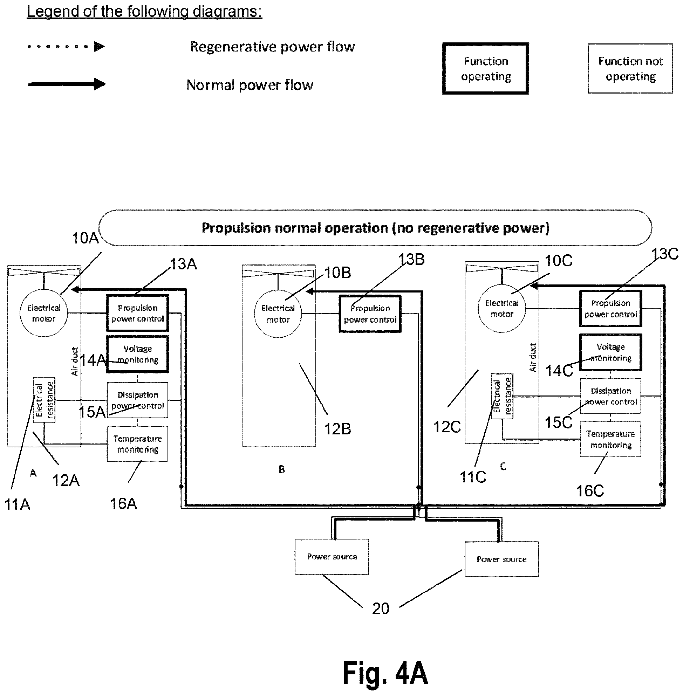

In the following, operation examples for different situations that may occur during operation of the electric aircraft will be illustrated with reference to Figs. 4A to 4D. As can be seen from the drawings, the same system architecture that is shown by way of example in Fig. 1A, including three distributed electrical propulsion modules out of which two have power dissipation capability, is used for the illustration. Corresponding components are therefore labeled with the same reference numerals.

In particular, these diagrams illustrate normal power flow and regenerated power flow, as well as the active or inactive state of the respective function blocks. Specifically, as can be seen from the legend shown above Fig. 4A, the normal power flow is indicated with solid arrows and the regenerated power flow is indicated with dotted arrows. A functional block that is active (i.e. the respective functions operating) is shown with a bold boundary, whereas an inactive functional block (i.e. the respective function is not operating) is shown with a thin boundary. The latter distinction is only introduced, however, for the control and monitoring blocks, whereas for the rest of the block, such as dissipation devices and electric motors, no distinction is made for reasons of simplicity; their functional state is obvious from the respective situation.

Specifically, Fig. 4A illustrates the case of normal propulsion operation, without any power regeneration, so that there is no overvoltage threat. As can be seen from the drawing, in that case all three electric motors consume power and the respective propulsion power control and voltage monitoring modules are active. No dissipation power control and no temperature monitoring is necessary and the respective function blocks are therefore inactive.

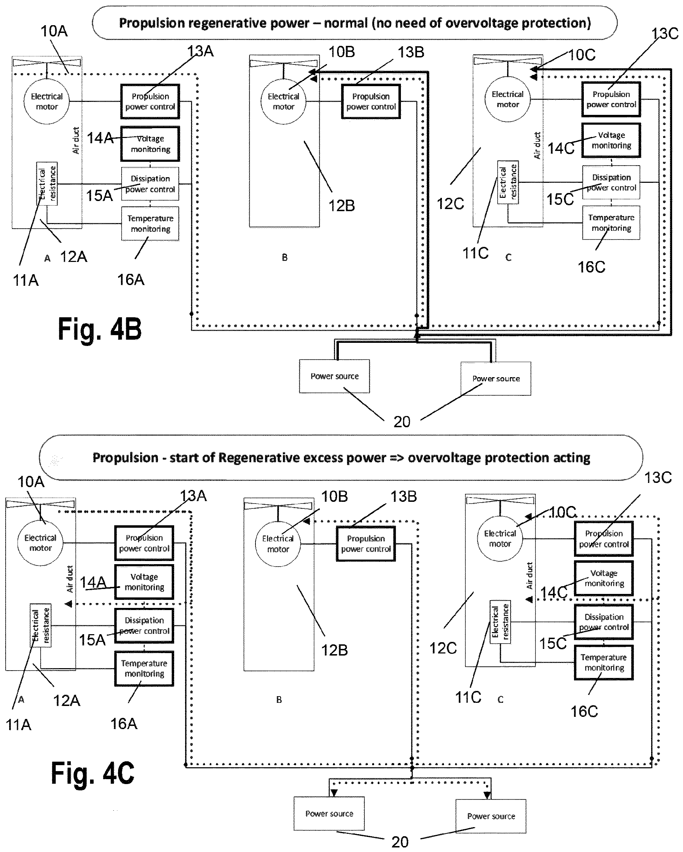

The following drawing of Fig. 4B illustrates the case where there is power regeneration (specifically: in electrical propulsion module A on the left-hand side) but there is not yet any excess power (i.e. the regenerated power can be completely consumed) so that there is no overvoltage threat. As can be seen from the drawing (the dotted line originating from motor 10A) the electric motor of the A module regenerates power which is directed to electric motors 10B and 10C which are still consuming power, thereby supporting the power source 20 in delivering propulsion energy. As in Fig. 4A, no dissipation power control and temperature monitoring is necessary in that case, for which reason the respective function blocks are inactive.

In the following diagram, Fig. 4C, power regeneration in excess occurs during propulsion so that an overvoltage protection process according to an embodiment of the present invention is triggered. A main reason causing excess power to occur may be an erroneous propulsion power control or an erroneous battery behaviour in the event of reverse power flow. As can be seen from the drawing, in the present case the regenerated power (indicated by the dotted line starting at electric motor 10A) is sufficient to power electric motors 10B and 10C that are still consuming power so that no normal power flow from power source 20 is necessary any more. At the same time, further regenerated power is diverted to the power source 20 for charging. Nevertheless, excess power remains that can be consumed neither by the still operating electrical motors nor by the power source. Hence, excess power is diverted to the dissipation devices available on the network, which are dissipation devices 11A and 11C. Accordingly, dissipation power control modules 15A and 15C become active. Furthermore, the temperature of the dissipation device must now be monitored, for which reason temperature monitoring modules 16A and 16B become active.

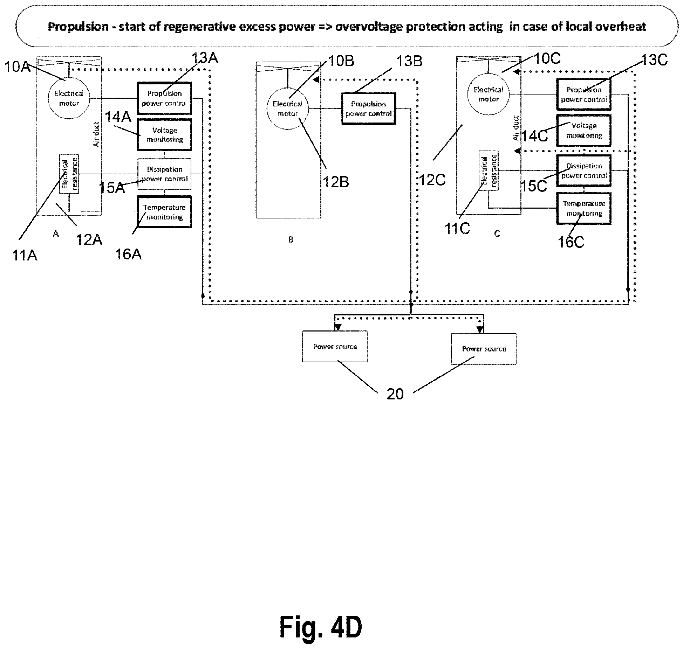

Finally, Fig. 4D illustrates the case, when there is still excess power regeneration and in one of the dissipation devices (specifically: dissipation device 11A) an over-temperature is detected during temperature monitoring. In that case this dissipation device has to stop dissipation and must be backed up by another, remotely located dissipation device (in this case: dissipation device 11C). As can be seen from the drawing, the power flow is rather similar to that of Fig. 4C with the only difference being that power regulation to dissipation device 11A is stopped. Hence, no power control in block 15A is necessary any longer for which reason this functional block becomes deactivated. On the other hand, temperature monitoring continues in block 16A in order to determine when the ongoing cooling down process has cooled down to dissipation device 11A so far that it is again ready to consume excess power.

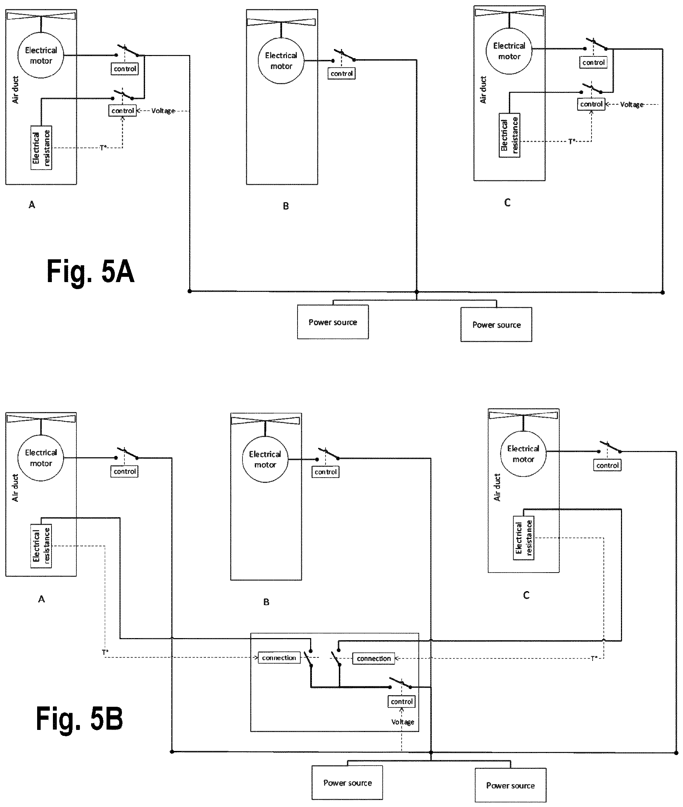

Finally, Figs. 5A and 5B are electrical diagrams illustrating the electrical connections between the power source, the electric motors and the dissipation devices in more detail, for the versions with modular (decentralized) power control (in Fig. 5A corresponding to Fig. 1A) and with centralized power control (in Fig. 5B corresponding to Fig. 1B).

As can be seen therefrom, the main difference between the two versions is that in case of centralized power control, only a single voltage control switch needs to be implemented, because the detected voltage is the same throughout the network. On the other hand, the temperature detection individually performed for the individual dissipation devices requires separate connection switches to be implemented in the centralized power control module, one for each illustrated dissipation device. In case of decentralized power control, in each module a common switch may be used for controlling excess power flow to the dissipation device in each module, which is controlled both according to the voltage monitoring and according to the (local) temperature monitoring.

For the sake of completeness, it is further noted that flow control is preferably implemented by means of pulse width modulation (PWM). This means that when a particular one of the illustrated connections shall be "closed", the power control is achieved by opening and closing the respective power control switches in an alternating manner with a predetermined frequency (duty ratio) rather than having it closed permanently. Thus, the power flow diverted to the resistive loads can be controlled.

In summary, the present invention relates to an overvoltage protection system for an electric aircraft to protect the aircraft electrical network from overvoltages that may occur during excess power regeneration by electrical propulsion engines. If excess regeneration power occurs in the network, which is detected by permanent voltage monitoring, the excess power is diverted in a controlled and regulated manner to dissipation devices for being transformed into heat. In order to maintain flight safety and dissipation efficiently, the dissipation devices are cooled down, preferably by means of an air flow to which the aircraft is subjected to during flight or by the propulsion air flow.

## Claims

1. A system for overvoltage protection in an electrical network of an aircraft with electrical propulsion, against overvoltage resulting from excess power being generated by one or more propulsion engines regenerating power, the system comprising
a voltage monitoring device for measuring a voltage in the electrical network and detecting whether or not the voltage exceeds a predetermined upper threshold value,
a power control device coupled to said voltage monitoring device to receive a voltage measurement result as an input for diverting and regulating the excess power to flow to one or more dissipation devices including resistive loads located in or on the aircraft in a controlled manner when it is detected that the voltage exceeds the upper threshold value,
said one or more dissipation devices for transforming electrical power into heat and dissipating the electrical power as thermal power in the resistive loads, and
an arrangement for cooling down the dissipation devices during operation of the aircraft.

2. A system according to claim 1, wherein
said voltage monitoring device further detecting whether or not the voltage in the electrical network has dropped below a second threshold value, said second threshold being smaller than or equal to said upper threshold value, and
said power control device further stopping or reducing power flow to said dissipation devices when it is detected that the voltage has dropped below the second threshold.

3. A system according to claim 1 or 2, further comprising one or more temperature measurement devices coupled to said power control device for monitoring a temperature of each of the dissipation devices.

4. A system according to claim 3, wherein said power control device further being adapted to stop power flow to a dissipation device when the temperature of said dissipation device exceeds a predetermined temperature threshold value.

5. A system according to claim 4, wherein the excess power is distributed via the electrical network that interconnects the propulsion engines and the dissipation devices to a different dissipation device located on or in the aircraft, when the temperature of said dissipation device exceeds said predetermined temperature threshold value.

6. A system according to any of claims 1 to 5, wherein there are a plurality of dissipation devices, each of the dissipation devices being associated with and located in proximity to a respective one of a plurality of electrical propulsion engines.

7. A system according to any of claims 1 to 6, wherein said power control device comprising a plurality of power control modules, each of the power control modules being associated with a propulsion engine and a corresponding dissipation device.

8. A system according to any of claims 1 to 7, wherein said arrangement for cooling down the dissipation devices is realized by implementing the resistive loads in an aircraft area submitted to air flow so as to be cooled down by said air flow.

9. A system according to claim 8, wherein said resistive loads are implemented in the air duct of one or more propulsion fans of an aircraft with duct fan technology.

10. An air vehicle comprising a system according to any of claims 1 to 9.

11. A method of overvoltage protection in an electrical network of an aircraft with electrical propulsion, against overvoltage resulting from excess power being generated by one or more propulsion engines regenerating power, the method comprising the steps of
monitoring a voltage in the electrical network,
detecting whether or not the voltage exceeds a predetermined upper threshold value,
regulating the excess power to flow to one or more resistive loads located in or on the aircraft in a controlled manner when it is detected that the voltage exceeds the upper threshold value,
dissipating the electrical power as thermal power in the resistive loads, and
cooling down the resistive loads.

12. A method according to claim 11, further comprising the steps of
detecting whether or not the voltage in the electrical network has dropped below a second threshold value, said second threshold being smaller than said upper threshold value, and
stopping or reducing power flow to said resistive loads when it is detected that the voltage has dropped below the second threshold.

13. A method according to claim 11 or 12, further comprising the step of monitoring a temperature of each of the resistive loads.

14. A method according to claim 13, further comprising the step of stopping power flow to a resistive load when the temperature of said resistive load exceeds a predetermined temperature threshold value.

15. A method according to claim 13, further comprising the step of redistributing the excess power so as to flow to a different resistive load located on or in the aircraft, when the temperature of said resistive load exceeds said predetermined temperature threshold value.

## Amended claims

### Amended claims in accordance with Rule 137(2) EPC.

1. A system for overvoltage protection in an electrical network of an aircraft with electrical propulsion, against overvoltage resulting from excess power being generated by one or more propulsion engines (10A, 10B, 10C) regenerating power, the system comprising
a voltage monitoring device (14, 14A, 14C) for measuring a voltage in the electrical network and detecting whether or not the voltage exceeds a predetermined upper threshold value,
a power control device (15, 15A, 15C) coupled to said voltage monitoring device (14, 14A, 14C) to receive a voltage measurement result as an input for diverting and regulating the excess power to flow to one or more dissipation devices (11A, 11C) including resistive loads located in or on the aircraft in a controlled manner when it is detected that the voltage exceeds the upper threshold value, and
said one or more dissipation devices (11A, 11C) for transforming electrical power into heat and dissipating the electrical power as thermal power in the resistive loads,
**characterized by**
an arrangement (12A, 12C) for cooling down the dissipation devices (11A, 11C) during operation of the aircraft, wherein said arrangement (12A, 12C) for cooling down the dissipation devices (11A. 11C) is realized by implementing the resistive loads in an aircraft area submitted to air flow so as to be cooled down by said air flow.

2. A system according to claim 1, wherein
said voltage monitoring device (14, 14A, 14C) further detecting whether or not the voltage in the electrical network has dropped below a second threshold value, said second threshold being smaller than or equal to said upper threshold value, and
said power control device (15, 15A, 15C) further stopping or reducing power flow to said dissipation devices (11A, 11C) when it is detected that the voltage has dropped below the second threshold.

3. A system according to claim 1 or 2, further comprising one or more temperature measurement devices (16A, 16C) coupled to said power control device (15, 15A, 15C) for monitoring a temperature of each of the dissipation devices (11A, 11C).

4. A system according to claim 3, wherein said power control device (15, 15A, 15C) further being adapted to stop power flow to a dissipation device (11A, 11C) when the temperature of said dissipation device (11A, 11C) exceeds a predetermined temperature threshold value.

5. A system according to claim 4, wherein the excess power is distributed via the electrical network that interconnects the propulsion engines (10A, 10B, 10C) and the dissipation devices (11A, 11C) to a different dissipation device (11C; 11A) located on or in the aircraft, when the temperature of said dissipation device (11A; 11C) exceeds said predetermined temperature threshold value.

6. A system according to any of claims 1 to 5, wherein there are a plurality of dissipation devices (11A, 11C), each of the dissipation devices (11A, 11C) being associated with and located in proximity to a respective one of a plurality of electrical propulsion engines (10A, 10C).

7. A system according to any of claims 1 to 6, wherein said power control device comprising a plurality of power control modules (15A, 15C), each of the power control modules (15A, 15C) being associated with a propulsion engine (10A. 10C) and a corresponding dissipation device (11A, 11C).

8. A system according to any of claims 1 to 7, wherein said resistive loads are implemented in the air duct of one or more propulsion fans of an aircraft with duct fan technology.

9. An air vehicle comprising a system according to any of claims 1 to 8.

10. A method of overvoltage protection in an electrical network of an aircraft with electrical propulsion, against overvoltage resulting from excess power being generated by one or more propulsion engines (10A, 10B, 10C) regenerating power, the method comprising the steps of
monitoring (S10) a voltage in the electrical network,
detecting (S20 whether or not the voltage exceeds a predetermined upper threshold value,
regulating (S30, S41) the excess power to flow to one or more resistive loads (11A, 11C) located in or on the aircraft in a controlled manner when it is detected that the voltage exceeds the upper threshold value (S20: yes), and
dissipating (S40) the electrical power as thermal power in the resistive loads,
**characterized by** the step of
cooling down (S50) the resistive loads (11A, 11C),
wherein said cooling down (S50) the resistive loads is achieved by an arrangement, wherein the resistive loads are implemented in an aircraft area submitted to air flow so as to be cooled down by said air flow.

11. A method according to claim 10, further comprising the steps of
detecting (S44) whether or not the voltage in the electrical network has dropped below a second threshold value, said second threshold being smaller than said upper threshold value, and
stopping (S60) or reducing power flow to said resistive loads (11A, 11C) when it is detected that the voltage has dropped below the second threshold (S44: yes).

12. A method according to claim 10 or 11, further comprising the step (S52) of monitoring a temperature of each of the resistive loads (11A, 11C).

13. A method according to claim 12, further comprising the step (S60) of stopping power flow to a resistive load (11A, 11C) when the temperature of said resistive load (11A, 11C) exceeds a predetermined temperature threshold value.

14. A method according to claim 13, further comprising the step (S60) of redistributing the excess power so as to flow to a different resistive load (11C; 11A) located on or in the aircraft, when the temperature of said resistive load (11A; 11C) exceeds said predetermined temperature threshold value.
